# EUROPEAN PATENT SPECIFICATION

(11) **EP 2 428 302 B1**
(45) Date of publication and mention of the grant of the patent: **26.10.2016**
(21) Application number: 11180309.4
(22) Date of filing: 07.09.2011
(51) Int. Cl.: B23K 9/20, F16B 37/06

(54) **Fastening unit and method for attaching a fastening unit to a component by welding**
Befestigungseinheit und Verfahren zur schweißtechnischen Verbindung einer Befestigungseinheit mit einem Bauteil
Unité de fixation et procédé pour fixer une unité de fixation sur un composant par soudure

(30) Priority: 08.09.2010 DE 202010012368 U
(43) Date of publication of application: 14.03.2012
(73) Proprietor: Newfrey LLC, New Britain, CT 06053 (US)
(72) Inventor: Schneider, Joachim, 35394 Gießen (DE); Reindl, Johann, 35394 Gießen (DE); Kortmann, Hans-Gerhard, 35394 Gießen (DE); Drexler, Frank, 35394 Gießen (DE); Gottwals, Haymo, 35394 Gießen (DE); Napierala, Stefan, 35394 Gießen (DE)
(74) Representative: Haar, Lucas Heinz Jörn

(56) References cited:
- EP-A1- 0 550 977
- WO-A1-02/18087
- JP-A- H06 320 288

## Description

The invention relates to a fastening unit for attachment to a component by welding, with a fastening part having a through-hole that is equipped with an internal thread and passes through the fastening part between a first and a second end face, and having a welding section that is located on the second end face and at least partially surrounds the through-hole, and with an insert located in the through-hole that at least partially seals the through-hole. The invention additionally relates to a method for attaching a fastening unit to a component by welding.

Fastening units of the specified type are used in automotive manufacture, for example, to produce fastening points to which components and electrical connections can be reliably fastened using screws.

In a fastening unit of the specified type known from DE 199 54 354 A1, the fastening part is a contact piece designed in the manner of a welding nut whose through-hole is sealed with a cap made of plastic in the vicinity of a fastening region designed as a welding section. The cap has a flexible collar that circumferentially contacts the lateral surface of the through-hole. The cap is intended to prevent welding spatter from entering the through-hole and to prevent particles of paint from penetrating the interior of the through-hole during subsequent painting. To protect the internal thread on the side opposite the welding section, a threaded stud is screwed into the internal thread of the contact piece.

Furthermore, from DE 37 28 219 A1, there is known a welding nut that can be welded to a part and that has a threaded hole sealed from the environment by inserts of elastic plastic inserted in the two openings of the threaded hole. When a threaded stud is screwed in, these inserts can be displaced by it into a location that exposes the courses of the nut's thread.

Fastening units of the specified type are frequently welded onto a component that has a hole in order to be able to fasten a screw that has been inserted through the hole. In this design, the fastening unit is welded onto the component such that its through-hole is essentially coaxial to the hole in the component. Now, it has become evident that when the fastening unit is being welded to the component, for example by means of drawn-arc welding, there exists the danger that material from the melt that is spattered during the welding process may adhere to the edge of the hole in the component in the form of small beads or droplets, thereby hindering the insertion of a screw through the hole into the internally threaded through-hole of the fastening part.

For welding attachment by the electric drawn-arc method of a fastening element provided with a through-hole, it is known from DE 196 25 886 B4 to introduce a gas at a pressure greater than that of the environment into the fastening element during the welding process in order to push melt arising at the welding location outward with the aid of the gas and prevent the melt from entering the through-hole of the fastening element as a result of the magnetic field of the arc.

A welding apparatus disclosed in WO 02/18087 A1 comprises a weld head having means for holding a weld region of a fastening part adjacent a workpiece and inducing a weld arc between the weld region and workpiece to create a weld pool of molten material. The apparatus further comprising a pressurized fluid source and a fluid flow directing member for directing a pressurized fluid between the weld head and the fastening part and the weld pool so as to deflect any airborne fluid residue of the weld pool away from an internal threaded connector region of the fastening part. The directing member passes through and frictionally engages with the outer edges of the internal threads of the connecter region so as to form a thread channel therewith and to direct said fluid flow through said thread channel. Spiral grooves formed about the periphery of the directing member engage directly with the internal threads of the fastening part to again pass pressurized fluid into the threaded region of the part to create a positive pressure preventing transmission of vaporized gas and particles or molten metal splashes into the internal thread of the part.

JP HO6 320 288 A discloses a weld nut provided with projections on the end face to be welded. When the weld nut is projection welded to a base plate member a pilot pin is inserted through a bolt hole in the base plate member into a tapped hole of the weld nut from a central hole of a fixed electrode on which the base plate member rests. An axial groove is formed on the periphery of the pilot pin and air is supplied through the central hole and the groove around the tapped hole so that spatters generated from the projections at the time of welding are scattered outside the weld nut.

The object of the invention is to design a fastening unit of the initially mentioned type and a method for attaching the fastening unit to a component by welding such that, after the welding process has been carried out, it is possible to screw a screw into the fastening part of the fastening unit unhindered and without additional rework.

According to the invention, this object is attained by a fastening unit with the features specified in claim 1 and by a method for attaching the fastening unit by welding with the features specified in claim 15. Advantageous refinements and embodiments of the fastening unit are specified in the dependent claims.

The fastening unit according to the invention has a fastening part with a through-hole that is equipped with an internal thread and passes through the fastening part between a first and a second end face, and with a welding section that is located on the second end face and at least partially surrounds the through-hole, and has an insert located in the through-hole that at least partially seals the through-hole, and is distinguished in that the insert has a cylindrical wall which surrounds a cavity and covers the internal thread of the through-hole, wherein the cavity has at least one open-ended through-passage that passes through the insert inside the wall and is open at its ends adjacent to the end faces of the fastening part.

As a result of the design of the fastening unit according to the invention, the internal thread of the through-hole is efficaciously protected, so that neither particles spattered during the welding process nor paint from the subsequent painting of the component can reach the internal threads and prevent a screw from being screwed in.

The insert of the fastening unit according to the invention further makes it possible, during the welding process, to blow a gas into the interior of the welding section and into the hole in the component to be fastened with the fastening unit and thereby prevent droplets or beads of the melt or other particles emerging during the welding process from depositing on the inner edge of the welding section and of the hole in the component. In this way, access is kept free during the welding process for a screw to be screwed into the fastening part, so that a fastening process to be performed at a later time is possible unimpeded and without prior rework.

According to an advantageous embodiment of the invention, a mouth of the through-passage of the insert facing the welding section can have the form of a nozzle. It is especially advantageous when the nozzle is designed such that it generates a diverging stream. The blasting effect of the gas stream, and, hence, the blowing free of the edge of the hole adjoining the welding zone, can be considerably enhanced as a result of the nozzle shape of the mouth. Preferably, the nozzle is located inside the sealing lip.

In another advantageous embodiment of the invention, the wall of the insert can have on at least one end, preferably the end facing the welding section, an annular sealing lip that rests against an adjacent edge of the mouth of the through-hole to form a seal. Such a sealing lip improves the protection of the internal thread at the start of the thread, which is especially important for ease of screwing in, in particular improving protection from the entry of paint during later painting. If necessary, both ends of the wall may also be provided with a sealing lip.

The sealing lip can be elastically deformable to such a degree that it can be pushed through the through-hole together with the insert when the latter is removed.
Alternatively, a predetermined breaking point can be provided between the sealing lip and the wall, allowing the sealing lip to tear off when the insert is pushed out of the through-hole.

In order to facilitate the introduction of the insert into the through-hole of the fastening part, it is possible according to another proposal of the invention for the wall to have a pilot section on one end that tapers toward the end of the insert. Such a pilot section is especially advantageous when the elastically resilient wall has an outside diameter that is slightly larger than the inside diameter of the internal thread of the through-hole, in order to thus achieve a sufficiently stable and removable securing of the insert in the through-hole.

According to another advantageous embodiment of the invention, provision can be made for the wall to have an external thread on its outside that engages the internal thread of the through-hole, wherein the insert has, on at least one end, a tool engagement region for the engagement of a rotating tool. In this design, the insert can be removed with the aid of a screwdriver or even with the aid of a screw to be screwed into the through-hole if the screw is provided with a suitable tool engagement region at its pilot end.

According to another proposal of the invention, the insert can be provided with detent projections that latch into the internal thread of the through-hole to provide removable securing in the through-hole.

According to another proposal of the invention, the insert can have an approximately cylindrical central body that the wall surrounds at a distance, wherein the central body is connected to the wall by webs extending in the longitudinal direction of the wall and wherein free spaces which form multiple through-passages are present between the webs. In this design, the insert can be provided at its end facing the welding section with an annular chamber in which the through-passages terminate and that has the shape of an annular nozzle.

This refinement has the advantage that the through-passages have a cross-section that is considerably reduced in comparison to the through-hole, promoting the production of a gas stream with high flow velocity and corresponding blasting effect. The annular nozzle can be designed to produce a diverging stream.

According to the invention, the insert is preferably made of a thermoplastic material. The insert can either be manufactured separately or through the involvement of the fastening part. In the latter case, the primary molding of the insert can take place in the internally threaded through-hole of the fastening part. This has the advantage that the insert fills the grooves of the internal thread in a paint-tight manner, and eliminates the step of inserting the insert in the through-hole.

According to the invention, the method for attaching an inventive fastening unit to a component by welding is distinguished in that the fastening unit with the welding section is placed on the component having a hole such that it is essentially coaxial to the hole, in that the welding section is welded onto the component using an electric drawn-arc welding method, and in that a gas at a pressure greater than that of the environment is delivered to the through-passage of the insert during the welding process in such a way that a gas stream emerging from the through-passage strikes the welding zone and the edge of the hole.

The invention is explained in detail below on the basis of example embodiments, which are shown in the drawings. They show:
- Fig. 1: an end view of an insert for a fastening unit according to the invention,
- Fig. 2: a perspective view of the insert from Fig. 1,
- Fig. 3: a cross-section III - III of the insert from Fig. 1,
- Fig. 4: a cross-section IV - IV of the insert from Fig. 1,
- Fig. 5: a fastening unit according to the invention,
- Fig. 6: a fastening unit in the welding position on a component, and
- Fig. 7: a cross-section of another embodiment of an insert for a fastening unit according to the invention.

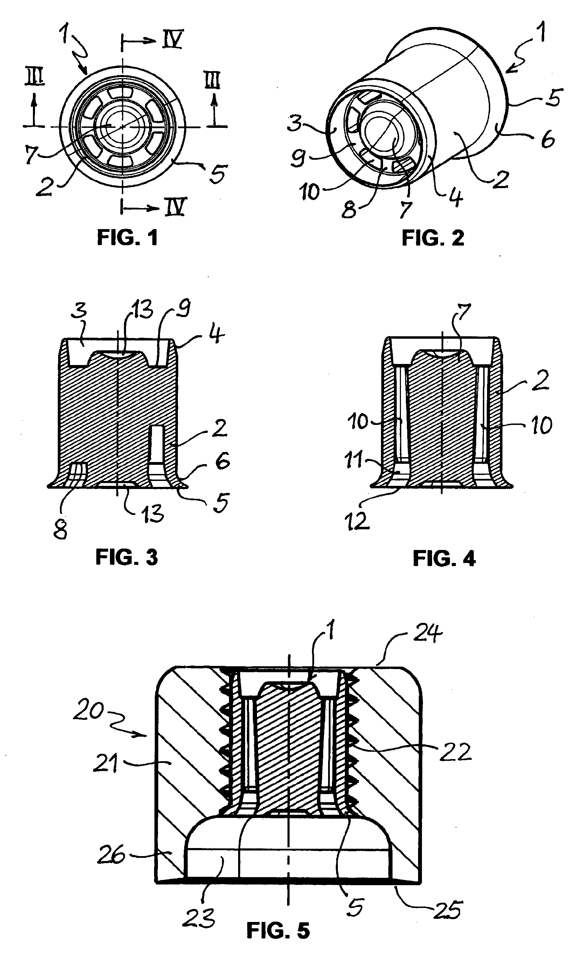

The insert 1 shown in Figures 1 through 4 has the shape of a sleeve with a cylindrical wall 2, which surrounds a cavity 3. One end of the wall 2 forms a pilot section 4 that is conically tapered on the outside toward the end of the insert 1. The other end of the wall 2 is provided with a sealing lip 5 whose outside diameter increases toward the face end of the insert 1. The sealing lip 5 has a sealing surface 6 in the manner of a concave molding, and its cross-section decreases toward the outer edge to ensure a resiliently elastic contact with the mating surface to be sealed.

Arranged in the cavity 3 of the insert 1 is an essentially cylindrical central body 7 whose outside diameter is smaller than the inside diameter of the wall 2, by which means an annular chamber is formed between the central body 7 and the wall 2. The annular chamber is subdivided by first radial webs 8 and second radial webs 9, which connect the central body 7 to the wall 2. The webs 8, 9 extend in the longitudinal direction of the insert and are arranged at a regular distance from one another, with each of the webs 9 being arranged between two webs 8. The webs 8 have a greater axial length and a greater wall thickness than the webs 9. The sections of the annular chamber located between the webs 8, 9 form through-passages 10 which extend within the wall 2 and are open at their face ends. Each of the webs 8, 9 ends at a distance from the face ends of the insert 1, so each of the through-passages 10 terminates in an open section of the annular chamber formed between the wall 2 and the central body 7. At the end of the insert 1 provided with the sealing lip 5, the open section of the annular chamber forms an annular nozzle 11 whose mean diameter increases toward the nozzle orifice 12 at the end face of the insert 1. In this way, the annular nozzle 11 produces a diverging stream when a gas stream with overpressure is delivered to the cavity 3 on the end face of the insert 1 facing away from the annular nozzle 11.

At both its end faces, the central body 7 has recesses 13, which are used for placement of an assembly or disassembly tool.

Fig. 5 shows an inventive fastening unit 20 intended for attachment to a component by welding. The fastening unit 20 has a fastening part 21, which has a through-hole 23 that is equipped with an internal thread 22. The through-hole 23 passes through the fastening part 21 between a first end face 24 and a second end face 25. On the end face 25, the fastening part 21 has a projecting, annular welding section 26, which surrounds the mouth of the through-hole 23 with a radial separation.

An insert 1 is arranged in the through-hole 23 in such a manner that the wall 2 covers the internal thread 22 and contacts the thread ridges of the internal thread 22 with a force caused by elastic deformation such that the insert 1 is held by friction in the through-hole 23. The insert 1 is additionally arranged such that the sealing lip 5 is located on the second end face 25 and rests against the edge of the mouth of the through-hole 23 to form a seal. In this way, the insert 1 protects the internal thread 22 from the incursion of weld spatter and paint when the fastening unit 20 is welded to a component and subsequently is painted together therewith.

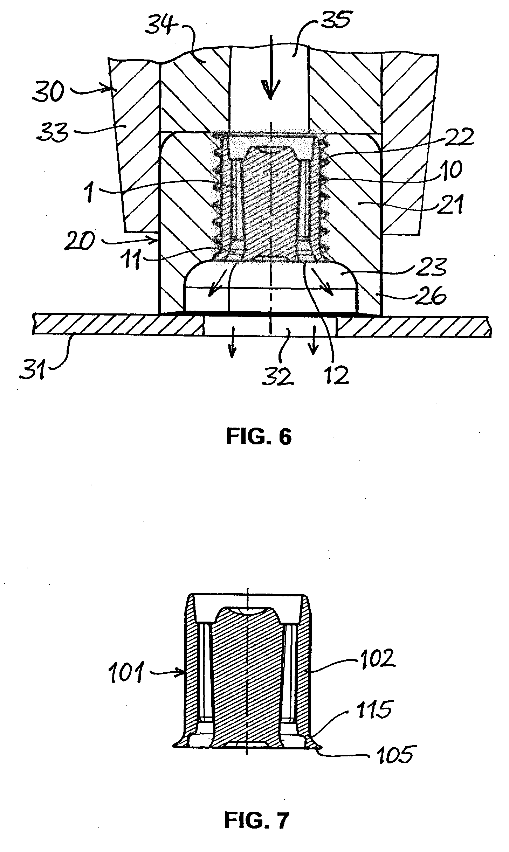

Fig. 6 shows the fastening unit 20 held in a welding apparatus 30 in an arrangement intended for welding onto a component 31. The component 31 is provided with a hole 32 that passes through it, and the fastening unit 20 is aligned such that its through-hole 23 is essentially coaxial to the hole 32. The welding apparatus 30 grips the fastening part 21 with a welding gun 33. Located in the center of the welding gun 33 is a tubular element 34, which rests against the end face 24 of the fastening part 21 and has a passage 35 that opens into the through-passage 23.

To carry out a welding process, air or another gas at elevated pressure is conducted through the passage 35 to the fastening unit 20. The air flows through the through-passages 10 of the insert 1 located in the through-hole 23 and passes out of the nozzle orifice 12 of the annular nozzle 11 in the form of a diverging stream into the space delimited by the welding section 26, which it then exits through the hole 32. By means of the gas stream thus produced, welding spatter and melt particles are blown away during the welding process using the known drawn-arc method, and residue and droplets of the melt are kept from accumulating on the inside edge of the hole 32, which could thus prevent insertion of a screw into the hole 32. At the same time, the insert 1 reliably protects the internal thread 22 from contaminants resulting from the welding process.

Even after the fastening unit 20 has been welded, the insert 1 remains in the through-hole 23 in order to protect the internal thread 22 during subsequent painting steps.

The insert 1 is removed from the through-hole 23 when the component 31 is attached to another component by means of a screw, which is to be screwed into the fastening part 21. The insert can be removed either by pushing it out with a punch-like tool, or using the screw to be screwed in, in that the screw drives the insert 1 ahead of it.

Fig. 7 shows a modified embodiment of an insert 101, in which the sealing lip 105 is attached to the wall 102 by a predetermined breaking point 115. When the insert 101 is pushed into the through-hole 23 of the fastening part 21 for removal, the sealing lip 105 tears off at the predetermined breaking point 115, and thus cannot prevent the insert 101 from being pushed out of the fastening part 21.

## Claims

1. Fastening unit for attachment to a component (31) by welding, with a fastening part (21) having a through-hole that is equipped with an internal tread (22) and passes through the fastening part between a first (24) and a second (25) end face, and having a welding section (26) that is located on the second end face and at least partially surrounds the through-hole, and with an insert (1) located in the through-hole that at least partially seals the through-hole, **characterized in that** the insert (1) has a cylindrical wall (2) which surrounds a cavity (3) and covers the internal thread of the through-hole (23), wherein the cavity (3) has at least one open-ended through-passage (10) that passes through the insert inside the wall (2) and is open at its ends adjacent to the end faces (24, 25) of the fastening part (21).

2. Fastening unit according to claim 1, **characterized in that** a mouth of the through-passage (10) has the form of a nozzle (11).

3. Fastening unit according to claim 2, **characterized in that** the nozzle (11) generates a diverging stream.

4. Fastening unit according to one of the preceding claims, **characterized in that** the wall (2) of the insert (1) has, on at least one end, an annular sealing lip (5) that rests against an adjacent edge of the mouth of the through-hole (23) to form a seal.

5. Fastening unit according to claim 4, **characterized in that** the sealing lip (5) is located on the end of the through-hole (23) adjacent to the welding section (26).

6. Fastening unit according to one of claims 2 through 5, **characterized in that** the nozzle (11) is located inside the sealing lip (5).

7. Fastening unit according to one of the preceding claims, **characterized in that** the wall (2) has a pilot section (4) on one end that tapers toward the end of the insert (1).

8. Fastening unit according to one of the preceding claims, **characterized in that** the wall (2) is elastically resilient and has an outside diameter that is slightly larger than the inside diameter of the internal thread (22) of the through-hole (23).

9. Fastening unit according to one of the preceding claims, **characterized in that** the wall (2) has an external thread on its outside that engages the internal thread (22) of the through-hole (23), wherein the insert (1) has, on at least one end, a tool engagement region for the engagement of a rotating tool.

10. Fastening unit according to one of the preceding claims, **characterized in that** the insert (1) has detent projections that latch into the internal thread (22) of the through-hole (23) to provide removable securing in the through-hole (23).

11. Fastening unit according to one of the preceding claims, **characterized in that** the insert (1) has a central body (7) that the wall (2) surrounds at a distance, **in that** the central body (7) is connected to the wall (2) by webs (8, 9) extending in the longitudinal direction of the wall (2), and **in that** free spaces which form through-passages (10) are present between the webs (8, 9).

12. Fastening unit according to claim 11, **characterized in that** the through-passages (10) terminate in a common annular chamber that takes the form of an annular nozzle (11).

13. Fastening unit according to one of the preceding claims, **characterized in that** the insert (1) is made of a thermoplastic material.

14. Fastening unit according to claim 13, **characterized in that** the insert is molded in the through-hole (23) of the fastening part (21) provided with an internal thread (22).

15. Method for attaching a fastening unit according to any one of the preceding claims to a component by welding **characterized in that** the fastening unit (20) with the welding section (26) is placed on the component (31) having a hole (32) such that it is essentially coaxial to the hole (32), **in that** the welding section (26) is welded onto the component (31) using an electric drawn-arc welding method, and **in that** a gas at a pressure greater than that of the environment is delivered to the through-passage (10) of the insert (1) during the welding process in such a way that a gas stream emerging from the through-passage (10) strikes the welding zone and the edge of the hole (32).

## Patentansprüche

1. Befestigungseinheit zur schweißtechnischen Verbindung mit einem Bauteil (31), mit einem Befestigungsteil (21), das eine mit einem Innengewinde (22) versehene Durchgangsbohrung, die das Befestigungsteil zwischen einer ersten (24) und einer zweiten (25) Stirnseite durchdringt, und einen an der zweiten Stirnseite angeordneten, die Durchgangsbohrung wenigstens teilweise umgebenden Schweißabschnitt (26) aufweist, und mit einem in der Durchgangsbohrung angeordneten Einsatz (1), der die Durchgangsbohrung wenigstens teilweise verschließt, **dadurch gekennzeichnet, dass** der Einsatz (1) eine zylindrische Wand (2) aufweist, die einen Hohlraum (3) umgibt und das Innengewinde der Durchgangsbohrung (23) abdeckt, wobei der Hohlraum (3) wenigstens einen an seinen Enden offenen Durchgangskanal (10) aufweist, der den Einsatz innerhalb der Wand (2) durchdringt und an seinen den Stirnseiten (24, 25) des Befestigungsteils (21) benachbarten Enden offen ist.

2. Befestigungseinheit nach Anspruch 1, **dadurch gekennzeichnet, dass** eine Mündung des Durchgangskanals (10) die Form einer Düse (11) hat.

3. Befestigungseinheit nach Anspruch 2, **dadurch gekennzeichnet, dass** die Düse (11) einen divergierenden Strahl erzeugt.

4. Befestigungseinheit nach einem der vorhergehenden Ansprüche, **dadurch gekennzeichnet, dass** die Wand (2) des Einsatzes (1) an wenigstens einem Ende eine ringförmige Dichtlippe (5) aufweist, die an einem benachbarten Mündungsrand der Durchgangsbohrung (23) dichtend anliegt.

5. Befestigungseinheit nach Anspruch 4, **dadurch gekennzeichnet, dass** die Dichtlippe (5) an dem dem Schweißabschnitt (26) benachbarten Ende der Durchgangsbohrung (23) angeordnet ist.

6. Befestigungseinheit nach einem der Ansprüche 2 bis 5, **dadurch gekennzeichnet, dass** die Düse (11) innerhalb der Dichtlippe (5) angeordnet ist.

7. Befestigungseinheit nach einem der vorhergehenden Ansprüche, **dadurch gekennzeichnet, dass** die Wand (2) an einem Ende einen sich zum Ende des Einsatzes (1) hin verjüngenden Einführabschnitt (4) aufweist.

8. Befestigungseinheit nach einem der vorhergehenden Ansprüche, **dadurch gekennzeichnet, dass** die Wand (2) elastisch nachgiebig ist und einen Außendurchmesser hat, der geringfügig größer ist als der Innendurchmesser des Innengewindes (22) der Durchgangsbohrung (23).

9. Befestigungseinheit nach einem der vorhergehenden Ansprüche, **dadurch gekennzeichnet, dass** die Wand (2) auf ihrer Außenseite ein Außengewinde hat, das in das Innengewinde (22) der Durchgangsbohrung (23) eingreift, wobei der Einsatz (1) an wenigstens einem Ende einen Werkzeugeingriffsbereich für das Eingreifen eines Drehwerkzeugs aufweist.

10. Befestigungseinheit nach einem der vorhergehenden Ansprüche, **dadurch gekennzeichnet, dass** der Einsatz (1) Rastnasen zum lösbaren Fixieren in der Durchgangsbohrung (23) aufweist, die in das Innengewinde (22) der Durchgangsbohrung (23) einrasten.

11. Befestigungseinheit nach einem der vorhergehenden Ansprüche, **dadurch gekennzeichnet, dass** der Einsatz (1) einen Zentralkörper (7) aufweist, den die Wand (2) in einem Abstand umgibt, dass der Zentralkörper (7) durch Stege (8, 9), die in Längsrichtung der Wand (2) verlaufen, mit der Wand (2) verbunden ist und dass zwischen den Stegen (8, 9) Freiräume vorhanden sind, die Durchgangskanäle (10) bilden.

12. Befestigungseinheit nach Anspruch 11, **dadurch gekennzeichnet, dass** die Durchgangskanäle (10) in einen gemeinsamen Ringraum münden, der die Form einer ringförmigen Düse (11) hat.

13. Befestigungseinheit nach einem der vorhergehenden Ansprüche, **dadurch gekennzeichnet, dass** der Einsatz (1) aus einem thermoplastischen Kunststoff besteht.

14. Befestigungseinheit nach Anspruch 13, **dadurch gekennzeichnet, dass** der Einsatz in der mit Innengewinde (22) versehenen Durchgangsbohrung (23) des Befestigungsteils (21) urgeformt ist.

15. Verfahren zur schweißtechnischen Verbindung einer Befestigungseinheit nach einem der vorhergehenden Ansprüche mit einem Bauteil, dadurch genkennzeichnet, dass die Befestigungseinheit (20) mit dem Schweißabschnitt (26) an dem mit einer Boh¬rung (32) versehenen Bauteil (31) im wesentlichen koaxial zu der Bohrung (32) angeordnet wird, dass der Schweißabschnitt (26) unter Anwendung eines elektrischen Hubzün¬dungs-Schweißverfahrens an das Bauteil (31) angeschweißt wird und dass während des Schweißprozesses ein Gas mit gegenüber der Umgebung höherem Druck dem Durchgangskanal (10) des Einsatzes (1) derart zugeführt wird, dass ein aus dem Durchgangskanal (10) austretender Gasstrom auf die Schweißzone und den Rand der Bohrung (32) trifft.

## Revendications

1. Unité de fixation pour attachement à un composant (31) par soudage, avec une pièce de fixation (21) ayant un trou traversant qui est équipé d'un filet interne (22) et passe à travers la pièce de fixation entre une première (24) et une seconde (25) face d'extrémité, et ayant une section de soudage (26) qui est située sur la seconde face d'extrémité et entoure au moins partiellement le trou traversant, et d'un insert (8) situé dans le trou traversant qui étanchéifie au moins partiellement le trou traversant, **caractérisée en ce que** l'insert (1) a une paroi cylindrique (2) qui entoure une cavité (3) et couvre le filet interne du trou traversant (23), dans laquelle la cavité (3) a au moins un passage traversant à extrémité ouverte (10) qui passe à travers l'insert à l'intérieur de la paroi (2) et est ouvert au niveau de ses extrémités adjacentes aux faces d'extrémité (24, 25) de la pièce de fixation (21).

2. Unité de fixation selon la revendication 1, **caractérisée en ce qu'**un orifice du passage traversant (10) a la forme d'une buse (11).

3. Unité de fixation selon la revendication 2, **caractérisée en ce que** la buse (11) produit un flux divergent.

4. Unité de fixation selon l'une des revendications précédentes, **caractérisée en ce que** la paroi (2) de l'insert (1) a, sur au moins une extrémité, une lèvre d'étanchéité annulaire (5) qui repose contre un bord adjacent de l'orifice du trou traversant (23) pour former un joint d'étanchéité.

5. Unité de fixation selon la revendication 4, **caractérisée en ce que** la lèvre d'étanchéité (5) est située sur l'extrémité du trou traversant (23) adjacent à la section de soudage (26).

6. Unité de fixation selon l'une des revendications 2 à 5, **caractérisée en ce que** la buse (11) est située à l'intérieur de la lèvre d'étanchéité (5).

7. Unité de fixation selon l'une des revendications précédentes, **caractérisée en ce que** la paroi (2) a une section pilote (4) sur une extrémité qui s'effile vers l'extrémité de l'insert (1).

8. Unité de fixation selon l'une des revendications précédentes, **caractérisée en ce que** la paroi (2) est résiliente élastiquement et a un diamètre extérieur qui est légèrement supérieur au diamètre intérieur du filet interne (22) du trou traversant (23).

9. Unité de fixation selon l'une des revendications précédentes, **caractérisée en ce que** la paroi (2) a un filet externe sur son extérieur qui s'engage avec le filet interne (22) du trou traversant (23), dans laquelle l'insert (1) a, sur au moins une extrémité, une région d'engagement d'outil pour l'engagement d'un outil tournant.

10. Unité de fixation selon l'une des revendications précédentes, **caractérisée en ce que** l'insert (1) a des protubérances à cliquet qui se verrouillent dans le filet interne (22) du trou traversant (23) pour assurer un arrimage amovible dans le trou traversant (23).

11. Unité de fixation selon l'une des revendications précédentes, **caractérisée en ce que** l'insert (1) a un corps central (7) que la paroi (2) entoure à une distance, **en ce que** le corps central (7) est relié à la paroi (2) par des bandes (8, 9) s'étendant dans la direction longitudinale de la paroi (2), et **en ce que** des espaces libres qui forment des passages traversants (10) sont présents entre les bandes (8, 9).

12. Unité de fixation selon la revendication 11, **caractérisée en ce que** les passages traversants (10) se terminent en une chambre annulaire commune qui prend la forme d'une buse annulaire (11).

13. Unité de fixation selon l'une des revendications précédentes, **caractérisée en ce que** l'insert (1) est réalisé en un matériau thermoplastique.

14. Unité de fixation selon la revendication 13, **caractérisée en ce que** l'insert est moulé dans le trou traversant (23) de la pièce de fixation (21) pourvu d'un filet interne (22).

15. Procédé d'attachement d'une unité de fixation selon l'une quelconque des revendications précédentes à un composant par soudage, **caractérisé en ce que** l'unité de fixation (20) avec la section de soudage (26) est placée sur le composant (31) ayant un trou (32) de façon à ce qu'il soit essentiellement coaxial au trou (32), **en ce que** la section de soudage (26) est soudée sur le composant (31) à l'aide d'un procédé de soudage à l'arc électrique, et **en ce qu'**un gaz à une pression supérieure à celle de l'environnement est délivré au passage traversant (10) de l'insert (1) pendant le processus de soudage de façon à ce qu'un flux de gaz émergeant du passage traversant (10) heurte la zone de soudage et le bord du trou (32).
